# EUROPÄISCHE PATENTANMELDUNG

(11) **EP 3 240 099 A1**
(43) Veröffentlichungstag der Anmeldung: **01.11.2017**
(21) Anmeldenummer: 17000570.6
(22) Anmeldetag: 05.04.2017
(51) Int. Cl.: H01M 10/48, H01M 10/42, H05K 5/06, B29C 45/14

(54) **VERFAHREN ZUR HERSTELLUNG EINES ELEKTRONISCHEN GERÄTES IN DER FORM EINES SPRITZGUSSTEILS MIT EINGELEGTER LEITERPLATTE**

(30) Priorität: 29.04.2016 DE 102016005291
(71) Anmelder: Häusermann GmbH, 3571 Gars am Kamp (AT)
(72) Erfinder: Hörth, Stefan, 3631 Ottenschlag (AT); Jarisch, Christoph, 3561 Zöbing (AT); Janesch, Rudolf, 3571 Gars am Kamp (AT)
(74) Vertreter: Riebling, Peter

(57) **Zusammenfassung**

Es wird ein Verfahren zur Herstellung eines elektronischen Gerätes (1) in der Form eines Spritzgußteils mit eingelegter Leiterplatte (2) mit elektronischen Bauteilen (4, 5) genannt, wobei die Leiterplatte (2) in das Spritzgußwerkzeug eingelegt wird und zumindest von einer Seite formschlüssig mit einem thermoplastischen Spritzguß mit elektrischen Isoliereigenschaften und thermisch gut leitenden Eigenschaften angeformt wird und das thermoplastische Spritzgußmaterial ein mit BN und/oder AIN Teilchen gefülltes Polymer ist und eine ästhetische Anmutung zur Bildung des Gehäuses (3) aufweist und die Leiterplatte (2) im Bereich der Anformungsseite eine Oberflächenstruktur aufweist und derart das Spritzgußmaterial mittels Einlegespritzguß einen derart hohen Haftverbund erreicht, daß bei einer Erwärmung des elektronischen Gerätes (1) im Bereich des Überganges der Leiterplatte (2) zum Polymer die Formschlüssigkeit zumindest bis 120°C erhalten bleibt und derart eine gute Wärmeableitung gewährleistet ist. Weiters wird ein elektronisches Gerät (1) hergestellt nach dem Verfahren genannt und die Anwendung eines derart hergestellten Gerätes mit integrierter Wärmeableitung zur Kühlung elektrischer bzw. elektronischer Bauteile (4, 5) mit hoher Wärmentwicklung, wie beispielsweise LEDs (4) oder Leistungsbauteile.

## Beschreibung

Die Erfindung betrifft ein Verfahren zur Herstellung eines elektronischen Gerätes in der Form eines Spritzgußteils mit eingelegter Leiterplatte, wobei der Spritzgußteil eine Mehrfachfunktion als ästhetisch anmutiges Gehäuse, als elektrisch isolierender Träger für die Leiterplatte, als thermisch gut leitendes Element zur Ableitung der auf der Leiterplatte erzeugten Wärme aufweist und in einer weiteren optionalen Ausbildung als optisch wirksamer Reflektor wirkt und ein derart hergestelltes elektronisches Gerät und der Anwendung .

Elektronische Geräte weisen üblicherweise ein ästhetisch anmutend gestaltendes Gehäuse auf und im Innenbereich eine Leiterplatte mit entsprechenden Bauteilen, wobei Betätigungselemente und Anschlußelemente bzw. Funktionselemente im Gehäuse bzw. dessen Oberfläche integriert sind.

Bei Geräten mit elektrischen bzw. elektronischen Bauelementen, wie insbesondere LED-Bauelementen oder Leistungshalbleitern und dergleichen Bauelementen muß auf eine entsprechende Wärmeableitung geachtet werden. Bei Leiterplatten kann dies durch Verwendung von sogenannten Metallkernleiterplatten oder Leiterplatten mit einem hohen Wärmeableitvermögen oder mit der sogenannten HSMtec erreicht werden bzw. es können auch bei sehr hohen Temperaturbelastungen keramische Leiterplatten verwendet werden.

Unter einer HSMtec Leiterplatte wird eine Mehrlagenleiterplatte mit integriertem Dickkupferelement verstanden, das auf einer Innenlagen auf einer vorstrukturierten Kupferlage mittels Ultraschall gut elektrisch leitend und gut thermisch leitend flächig verbunden wird und derart die Herstellung einer Mehrlagenleiterplatte mit integrierten Dickkupferelementen ermöglicht und die Leitung von elektrischen Strömen bis einige 100 Ampere ohne wesentliche Erwärmung der Mehrlagenleiterplatte.

Es können weiters flexible Leiterplatten oder starr-flexible Leiterplatten verwendet werden, wobei die thermischen Kontaktflächen für die elektronischen Komponenten von der einen Leiterplattenseite auf die andere Leiterplattenseite mittels thermisch gut leitfähigen Durchsteigelöchern (Vias) hergestellt wird.

In allen diesen Fällen muß die erzeugte Wärme von den elektrischen bzw. elektronischen Bauteilen von bzw. durch die Leiterplatte abgeleitet werden bzw. im Sinne einer in x-y Verteilung lateral gespreizt werden.

Dies kann im einfachsten Fall durch die Montage eines Kühlkörpers oder eines Wärmerohres (heat-pipe oder heat-tube) erfolgen, wobei der Wärmewiderstand von Wärmerohren deutlich kleiner ist als der von Metallen und derart können mit relativ kleinen Querschnitten große Wärmemengen passiv, also ohne Verwendung einer Umwälzpumpe, transportiert werden.

In der WO2012164506A1 werden als Wärmeableitelemente aus Kunststoff bestehende Formkörper beschrieben. Die Verbindung mit der Leiterplatte erfolgt durch Formschlusselemente, die auf oder in der Leiterplatte angeordnet sind und in den Kunststoff-Formkörper hinein greifen.

In der EP939066B1 wird ein Verfahren zum Formen von Pellets oder Agglomeraten von hochdichtem Bornitrid genannt, wobei ein Formen und Zerkleinern von hochreinem hexagonalem Bornitrid (hBN) genannt wird bis die Dichte oberhalb 1,86 g/cm³ liegt und weiters wird in Anspruch 6 genannt, daß derartige hochdichte agglomerierte Teilchen aus BN in ein Polymer geladen eine thermische Leitfähigkeit von mindestens 7,4 W/m °C ergeben.)

In der WO2000042098A1 wird eine thermisch leitfähige und spritzgießfähige Polymerblend-Komposition genannt bestehend aus einem thermoplastischen Polymer, einem Bornitrid Füllstoff mit zumindest 60-Gew.% und einer mittleren Partikelgröße von zumindest 50 µm und einem Kopplungsmittel mit einem Anteil von 0,1 bis 5-Gew.% von der Komposition und wird derart eine thermische Leitfähigkeit von größer 15 bzw. 18 bzw. 20 W/m°K bei einem Volumenwiderstand von zumindest 10¹⁶ Ohm.cm erreicht.

Das thermoplastische Harz wird gewählt aus der Gruppe bestehend aus: Flüssigkristall-Polymer (Liquid crystal polymer LCP), einem thermoplastischen Polyester, einem Polyamid, einem Polyphtalamide, einem Polyphenylene Sulfide, einem Polycarbonate, einem Polyetheretherketone, einem Polyaryletherketone und einem Polyphenylene Oxid.
Der Bornitrid (BN) Füllstoff weist eine hexagonale Kristallstruktur auf.

In der WO2003013845A1 werden diverse Methoden zur Herstellung von hBN Slurries und hBN Pasten und sphärischem BN Pulver und sphärischen Agglomeraten auf Basis hexagonaler BN Plateletts mit einem Durchmesser von 10 bis 500 µm bzw. 30 bis 150 µm genannt und in Anspruch 32 ein PolymerBlend mit darin homogen dispergierten sphärischen hBN Agglomeraten. Als Polymere werden genannt: ein schmelzprozessierbares Polymer, Polyesters, Phenolics, Silicone Polymers (e.g., Silicone Rubbers), Acrylics, Waxes, thermoplastische Polymere, niedrig molekular gewichtige Fluids, Polyphenylene Sulfide (PPS) und Epoxy Molding Compounds. Als Füllgrad wird in Anspruch 47 30 bis 80-Gewichts-% angegeben und für die thermische Leitfähigkeit wird in Anspruch 48 von 1 bis 15 W/m.°K angegeben.)

Der Erfindung liegt deshalb die Aufgabe zugrunde, die Verbindung einer Leiterplatte mit einem Kunststoff in einem Kunststoff-Spritzgießverfahren besonders thermisch und mechanisch hoch belastbar zu gestalten.

Die Lösung der gestellten Aufgabe erfolgt durch die technische Lehre des Anspruches 1.

Die Erfindung geht demnach von einem Verfahren zur Herstellung eines elektronischen Gerätes in der Form eines Spritzgußteils mit eingelegter Leiterplatte mit Wärme erzeugenden elektronischen Bauteilen, wobei die Leiterplatte in das Spritzgußwerkzeug eingelegt wird und zumindest von einer Seite formschlüssig mit einem thermoplastischen Spritzguß mit elektrischen Isoliereigenschaften und thermisch gut leitenden Eigenschaften angeformt wird.

Zur Lösung der gestellten Aufgabe ist die Erfindung , dadurch gekennzeichnet, daß das thermoplastische Spritzgußmaterial ein mit BN und/oder AIN Teilchen gefülltes Polymer ist und eine hohe Wärmeleiteigenschaft und eine ästhetische Anmutung zur Bildung des aus Kunststoff bestehenden Gehäuses (3) aufweist und die Leiterplatte im Bereich der Anformungsseite eine Oberflächenstruktur aufweist und derart das Spritzgußmaterial mittels Einlegespritzguß einen derart hohen Haftverbund erreicht, daß bei einer Erwärmung des elektronischen Gerätes im Bereich des Überganges der Leiterplatte zum Polymer die Formschlüssigkeit zumindest bis 120°C erhalten bleibt und derart eine gute Wärmeableitung gewährleistet ist.

Im Mittelpunkt der Erfindung besteht deshalb die Ausbildung der Anformungsseite der Leiterplatte in Richtung auf das dort aufzubringende Spritzguß-Material. Es soll auch bis zu ein Temperaturbereich von 120 °C verhindert werden, dass sich in diesem Übergangsbereich zwischen der Anforderungsseite der Leiterplatte und dem darauf lagernden Kunststoffmaterial Abschälungserscheinungen, Blasenbildung, Brüche oder Teil- oder Komplett-Ablösungen erfolgen. Diese Grenzfläche soll gemäß der vorliegenden Erfindung in besonderer Weise ausgebildet sein.

Es wurde erkannt, dass zunächst die Wahl des Kunststoffes für die Ausbildung dieser Grenzfläche von entscheidender Bedeutung ist. Wird nämlich ein Wärme leitfähiger Kunststoff verwendet, der gleichwohl elektrisch isoliert, können Wärmespannungen an der Grenzfläche besser aufgenommen werden und über die unbeschädigte Grenzfläche von Seiten der wärmeerzeugenden Leiterplatte auf das Kunststoffmaterial des angeformten Gehäuses übertragen werden.

Ferner wurde erkannt, dass es unbedingt notwendig ist, die Anformungsseite der Leiterplatte in besonderer Weise auszubilden, um das dort anzufügende, heißflüssige Kunststoffmaterial während Spritzgußvorganges form- und kraftschlüssig mit der Oberfläche der Leiterplatte zu verbinden.

Zu diesem Zweck schlägt die Erfindung verschiedene Oberflächengestaltungen der Leiterplatte vor. Diese Oberflächengestaltungen sind Gegenstand der folgenden Beschreibung und der Unteransprüche. Alle Oberflächengestaltungen werden jeweils allein für sich, jedoch auch in jeder beliebigen Kombination untereinander als erfindungswesentlich beansprucht.

Erfindungsgemäß wird die Verwendung von sogenannten thermischen Interface Elementen bezgl. Wärmespreizung in x-y-Richtung (heat-spreading) und auch bezgl. Wärmetransfer in z-Richtung vermieden und es sollen derartige Elemente durch die geeignete Ausbildung des Gehäuses und der Leiterplatte eines elektronischen Gerätes ersetzt werden.

Bei der Wärmeableitung ist in allen Fällen auf eine gute thermische Leitfähigkeit zu achten. Beispielhaft werden für die wesentlichen Materialien und einige spritzgießfähige thermoplastische Compound-Materialien die thermischen Wärmeleitfähigkeitswerte angegeben, wobei einzelne Materialien bzw. Additive keine isotrope Wärmeleitung haben, sondern bevorzugte Wärmeleitrichtungen aufweisen:
Die folgenden Begriffe sind Definitionen der im Rahmen der Erfindung verwendeten Stoffe und Materialien.

| | |
|---|---|
| FR-4 Epoxidharz-Glasfasergewebe-Verbund) | etwa 0,3 W/m°K |
| Polyimid (PI, z.B. Kapton von DuPont) | etwa 0,37 bis 0,52 W/m°K |
| Polyethylenthereephthalat (PET) | 0,24 W/m |
| Kupfer | 380 bis 400 W/m°K |
| Aluminium | 220 bis 237 W/m°K |
| Typische Heatsink-Pasten und Folien | 1 bis 4 bis max. 10 W/m°K |
| Kohlenstoffnanoröhrchen (CNTs) | bis etwa 6.000 W/m°K |
| Diamant etwa 2.300 W/m°K richtungsabhängig | |
| Aluminiumnitrid (AIN) | 180 bis 220 W/m°K |

Bornitrid (BN) hexagonal (hBN) 400 bis 600 W/m°K in-plane richtungsabhängig Thermoplastische Spritzguß-Compounds:

| | |
|---|---|
| Luvocom^{(R)} 1301-8331 PPS | 8,0 W/m°K |
| Luvocom^{(R)} 1301-8312 PPS | 28,0 W/m°K |
| Luvocom^{(R)} 50-8779 PC/ABS | 17,0 W/m°K |
| Luvocom^{(R)} 1850-8652 PBT | 16,0 W/m°K |
| PA-compound mit 3M BN-plateletts | 8 W/m°K |
| TPE-compound mit 3M BN-plateletts | 15 W/m°K |
| CoolPoly^{(R)} D8102 TPE | 3 W/m°K |
| CoolPoly^{(R)} D5108 PPS | 10 W/m°K |
| Ensinger Tecacomp® TPE TC-white-3975V | 8,0 bzw. 2,0 W/m°K |
| Ensinger Tecacomp® PA66 TC-white-3923 | 4,5 bzw. 1,5 W/m°K |
| Ensinger Tecacomp® PBT TC-white-4038 | 1,4 bzw. 1,3 W/m°K |
| Ensinger Tecacomp® PPS-TC-white-4082 | 1,3 bzw. 4,0 W/m°K |
| Covestro PC Markrolon® TC8030 | 20 W/m°K (ISO 22007-2) bzw. |
| | 13 W/m°K (ASTM E 1461-01) |

In der DIN EN ISO 22007 wird die Bestimmung der Wärme- und Temperaturleitfähigkeit festgelegt, läßt jedoch große Interpretationsmöglichkeiten offen, weil unterschiedliche Meßverfahren akzeptiert werden und die Herstellung der Proben nicht festgelegt ist, also kein Unterschied zwischen Spritzgießen, Pressen oder Extrudieren erfolgt.

Demzufolge sind die angegebenen Werte laut den jeweiligen Datenblättern nicht notwendigerweise vergleichbar und dienen nur zur Orientierung.

Luvocom^{(R)} ist ein thermisch leitfähiger Compound der Firma Lehmann & Voss & Co., 20354 Hamburg, Deutschland.

Die Werte bezgl. PA- und TPE-compound mit 3M BN-plateletts stammen aus Datenblättern und Broschüren der Firma 3M Advanced Materials Division, 3M Center St. Paul, MN USA.

CoolPoly^{(R)} D8102 TPE und D5108 PPS sind Beispiele thermisch leitfähiger thermoplastischer Compounds der Firma DSM Engineering Plastics B.V., 6135 KR Sittard, The Netherlands.

Tecacomp® TPE 3975V und PA66 3923 PBT 4038 und PPS 4082 sind Beispiele thermisch leitfähiger thermoplastischer Compounds der Firma Ensinger Sintimid GmbH, Ensingerplatz 1, 4863 Seewalchen am Attersee, Österreich.

Covestro PC Markrolon® TC8030 ist beispielhaft ein Produkt der Firma Covestro AG, Polycarbonates Business Unit, Kaiser-Wilhelm-Allee 60, 51373 Leverkusen, Deutschland (ehemals Bayer MaterialSciences).

Diese Angaben sollen nur beispielhaft die Vielzahl an thermoplastisch verarbeitbaren thermisch leitfähiger Compound Materialien aufzeigen, wobei durch Beimengung von beispielsweise von 0,03Gew.-% bzw. 0,10-Gew.-% bzw. 1,5-Gew.-% von uDiamond^{(R)} von der Firma Carbodeon Ltd., Oy, Pakkalankuja 5, 01510 Vantaa, Finland zu PA66 mit 15%BN Füllung eine Erhöhung der Wärmeleitfähigkeit um 25% bis 130% erreicht werden kann bzw. ein PA66 mit bzw. 44,9-% BN Füllung eine durchschnittliche Erhöhung um 25% bewirkt. Erfahrungsgemäß gilt dies generell, da die Beimengung von nanoskaligen thermisch gut leitfähigen Partikeln zu mikrometergroßen thermisch gut leitfähigen Partikeln die Perkolationsschwelle reduziert und derart bei gleichem Füllgrad die Wärmeleiteigenschaften erhöht. Dieses Phänomen ist in Analogie aus Kunststoffen mit elektrisch gut leitfähigen Partikeln bestens bekannt und werden oftmals multimodale Pigmentmischungen mit unterschiedlichen d50 Abmessungen und unterschiedlichen geometrischen Formen zur Verbesserung der Leitfähigkeitseigenschaften verwendet.

Im vorliegenden Fall kann es auch sinnvoll nanoskalige elektrisch leitfähige Teilchen aus Silber oder Palladium zu verwenden, da ein maximaler Füllgrad von typisch 0,1% keinen elektrisch leitfähigen Pfad bewirken wird, aber die Wärmeleitfähig sehr positiv erhöhen wird und unter Umständen eine bessere isotrope Wärmeleiteigenschaft bewirkt und die oftmals wesentlich schlechtere Wärmeleitung senkrecht zu der Spritzgußrichtung verbessert.

Ganz wesentlich bei der Verwendung von spritzgußfähigen und thermisch gut leitfähigen Kunststoffen bei der erfindungsgemäßen Anwendung ist deren Dauertemperaturbeständigkeit von beispielsweise typisch 120°C bei einer LED-Anwendung und der Erfüllung der UL94 Tests zur Brennbarkeit von Kunststoffen für Teile in Geräten und Anwendungen der Underwriters Laboratories (UL), insbesondere der Klassifizierung gemäß V-0.

Weiters ist für die dauerhafte Funktion des Wärmeübergangs der Leiterplattenoberfläche zum Spritzgußmaterial ganz wesentlich, also die Formschlüssigkeit. Unter einer formschlüssigen Verbindung wird das Ineinandergreifen von den beiden Verbindungspartnern Leiterplatte und Gehäuse verstanden, wobei die beiden Verbindungspartner auch bei der Erhöhung der Temperatur einen Formschluß bewahren und kein Luftspalt oder keine kleinen Ablösungen zwischen den beiden Verbindungspartnern entstehen. Bei einer Erwärmung ist darauf zu achten, daß aufgrund nicht zu vermeidender unterschiedlicher thermischer Ausdehnungskoeffizienten der beiden Materialien der Verbindungspartner kein Luftspalt entsteht, da dieser eine gute Wärmeableitung zunichtemachen würde.

Üblicherweise wird der eine Verbindungspartner durch die untere Seite der Leiterplatte mit einer Kupferfläche und der von Kupfer unbedeckten FR-4 Oberfläche bzw. einem allfälligen Lötstopp-Lack gebildet und auf der oberen Seite sind elektrische bzw. elektronische Bauteile angeordnet. Der zweite Verbindungspartner wird durch das Gehäuse gebildet und kann entsprechend der Gestaltung des Einlegespritzgußwerkzeuges ausgebildet werden. Das Gehäuse kann daher spritzgußtechnisch in Löchern oder Sacklöchern oder anderen Kavitäten der Leiterplatte eine feste Anbindung erreichen und kann auch die Leiterplatte umschließen, also über die Leiterplattenkante geführt werden und derart kann die Leiterplatte umspritzt bzw. teilumspritzt werden.

Die Kupferfläche der unteren Seite der Leiterplatte kann weiters passiviert, also geschützt gegen eine Oxidation ausgebildet sein. Diese Passivierung kann organisch oder anorganisch mit chemisch Nickel oder Nickel-Gold ausgeführt sein. Weiters kann die Kupferfläche inklusive der allfälligen Passivierungsschicht mikrostrukturiert ausgebildet sein und ist derart die Kupferoberfläche inklusive der allfälligen Passivierungsschicht bzw. der diversen Passivierungsschichten vergrößert und kann derart eine bessere Wärmeübertragung an das Spritzgußmaterial des Gehäuses stattfinden bzw. ist auch der Formschluß bzw. die Anhaftung besser.

In einer Weiterbildung der Erfindung können die mechanischen Löcher bzw. Durchsteigelöcher in der Leiterplatte dazu benützt werden, sodaß das Spritzgußmaterial hindurch gespritzt wird und auf der Bauteilseite der Leiterplatte ein Niederhalteelement ausgebildet wird.

Durch die Anzahl und Ausführung der Niederhalteelemente kann sichergestellt werden, daß bis zur geplanten Temperaturerhöhung keine Spaltbildung zwischen den beiden Verbindungspartnern Leiterplatte und Gehäuse zustande kommt und der Formschluß aufrecht bleibt. Dies ist insbesondere bei großflächigeren Leiterplatten erforderlich, bei denen einen randseitige Umspritzung bzw. Teilumspritzung nicht ausreichend ist. Die im inneren Bereich der Leiterplatte angeordneten Niederhalteelemente sind auch spritzgußtechnisch von Vorteil, da diese die Leiterplatte positionsgenau im Werkzeug festhalten und eine allfällige Durchbiegung durch den Spritzgußdruck hintanhalten.

Bei entsprechend großen Leiterplattenelementen sind überdies Belüftungslöcher bzw. Steigelöcher für den Spritzgußkunststoff erforderlich. Es können auch Mikro-Belüftungselemente im Spritzgußwerkzeug in der Form von sehr dünnen Schlitzen oder Löchern ausgebildet werden.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung offenbarten Angaben und Merkmale, insbesondere die in den Zeichnungen dargestellte räumliche Ausbildung, werden als erfindungswesentlich beansprucht, soweit sie einzeln oder in Kombination gegenüber dem Stand der Technik neu sind. Soweit einzelne Gegenstände als "erfindungswesentlich" oder "wichtig" bezeichnet sind, bedeutet dies nicht, dass diese Gegenstände notwendigerweise den Gegenstand eines unabhängigen Anspruches bilden müssen. Dies wird allein durch die jeweils geltende Fassung des unabhängigen Patentanspruches bestimmt.

Im Folgenden wird die Erfindung anhand von mehrere Ausführungswege darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
Figur 1: einen schematischen Schnitt durch ein elektronisches Gerät (1) mit einem Gehäuse (3) und einer Leiterplatte (2),
Figur 2: einen schematischen Schnitt durch eine Leiterplatte (2) mit oberseitig angeordneten elektronischen Bauteilen (4, 5) und einer Kerbfräsung (8).

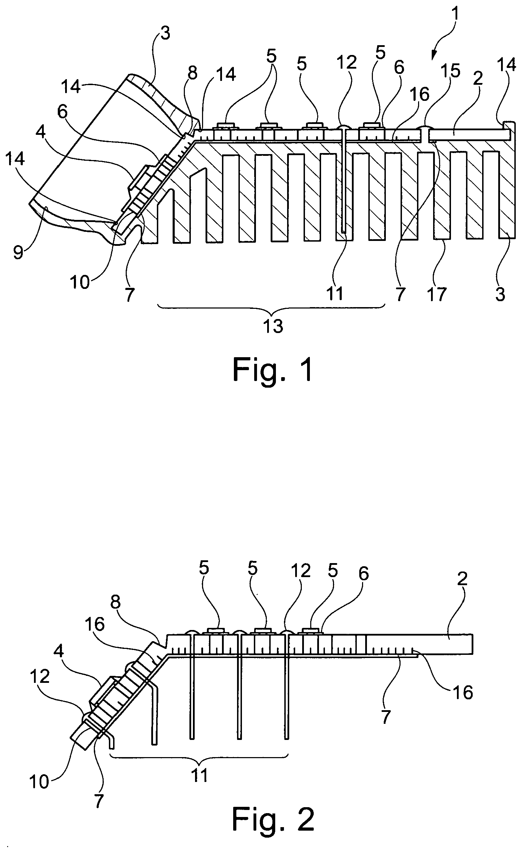

In Figur 1 wird ein schematischer Schnitt durch ein elektronisches Gerät (1) mit einem Gehäuse (3) und einer Leiterplatte (2) dargestellt.

Diese Ausführungsform ist nur exemplarisch dargestellt und ohne Details wie Bedienungselemente oder einem Batteriefach oder einem elektrischen Ladeanschluß oder einem allfälligen Deckel und dergleichen Elementen und soll aufzeigen, daß mit einem Gehäuse (3) eine Wärmespreitzung bzw. eine Wärmeableitung durch den direkten flächigen Kontakt mit einer Leiterplatte (2) möglich machen kann.

In dieser Ausführungsform eines elektronischen Gerätes (1) wird ein LED-Bauteil (4) als wärmeerzeugendes Element dargestellt. Grundsätzlich ist diese Art des Einlegespritzgusses jedoch für eine Vielzahl an elektronischen bzw. elektrischen Bauteilen auf einer Leiterplatte (2) anwendbar. Die Bauteile (5) stellen weitere Bauteile dar, die für die Stromversorgung bzw. Steuerung in diesem Fall der LED (4) dienen. Grundsätzlich können auch die Bauteile (5) Hochleistungsbauteile mit einer hohen Wärmeproduktion sein, die eine gute Wärmeableitung benötigen.

Die Leiterplatte (2) kann im einfachsten Fall eine zweiseitige durchkontaktierte Leiterplatte sein oder eine Mehrlagenleiterplatte oder eine Metallkernleiterplatte und kann als starre Leiterplatte (2) oder als flexible Leiterplatte oder als starr-flexible Leiterplatte oder als Dickkupferleiterplatte oder als sogenannte HSMtec Leiterplatte, also einer Leiterplatte mit einem in einer Innenlage integrierten Dickkupferprofil ausgebildet sein, wobei das Dickkupferprofil mittels Ultraschallsonotrode flächig mit einer Innenlagenkupferschicht thermisch gut leitend verbunden ist.

Das zumindest eine wärmeproduzierende Bauelement (4) bzw. gegebenenfalls weiter Bauteile (5) ist mittels Lötprozeß auf der Leiterplattenoberseite mit der Kupferstruktur (6) elektrisch leitend verbunden bzw. auch thermisch gut verbunden. Die Kupferstruktur (6) kann mittels thermisch gut leitenden Durchsteigelöchern (10) mit der unterseitigen Leiterbahn-Kupferstruktur (7) verbunden sein, wobei die unterseitigen Leiterbahnen (7) üblicherweise strukturiert ausgebildet sind und nur in jenem Bereich, wo eine thermische Spreizung bzw. Ableitung gewünscht ist durchgehend.

Bei Verwendung von thermisch gut leitenden Durchsteigelöchern (10) mit einer elektrischen Leitfähigkeit ist naturgemäß auf eine elektrische Trennung der Leiterbahnen (7) zu achten. Bei Verwendung von elektrisch nichtleitenden Durchsteigelöchern (10) ist keine Trennung der Leiterbahnen (7) erforderlich.

Die Kupferoberfläche der Leiterbahnen (7) im Anspritzbereich bzw. im Bereich der Anformung können eine organische Oberflächenpassivierung (OSP Organic Solderability Preservative - z.B. Entek oder Shikoku-Glicote oder Tamura-Solderite) aufweisen oder eine metallische Passivierung aufweisen und derart aus chemisch Nickel oder Nickel-Gold oder Nickel-Silber gebildet sein, da Kupfer in normaler Umgebung innerhalb weniger Stunden oberflächig oxidiert und eine derartige Oxidschicht unkontrollierbar bezgl. Haftverbund wirken kann. Die Leiterplatte (2) kann weiters eine oder mehrere Kerbfräsungen (8) aufweisen und kann derart mit dem gewünschten Winkel abgebogen werden und kann derart eine 3-D Leiterplatte in das Spritzgußwerkzeug eingelegt werden. Es können derart auch mehrere Elemente der Leiterplatte (2) in unterschiedliche Richtungen gebogen werden. In einer bevorzugten Ausführungsform werden sogenannte HSMtec Leiterplatten mit zumindest einem integrierten Dickkupferprofil verwendet.

Das FR-4 Material der Leiterplatte (2) wird einseitig bis zum Dickkupferelement mit einer Kerbe (8) frästechnisch oder mittels Laser versehen und dann kann die Leiterplatte entlang dieser Kerbe (8) um den gewünschten Winkel gebogen werden. Der Biegevorgang der Leiterplatte (2) kann auch im Zuge des Einlegevorgangs in das Spritzgußwerkzeug erfolgen.

Das Gehäuse (3) wird in einem Einlegespritzgußwerkzeug durch einen Spritzgußprozeß mit einer formschlüssigen Verbindung an die Leiterplatte (2) hergestellt. Insbesondere die Unterseite der Leiterplatte (2) mit den Leiterbahnen (7) muß gut haftend für das thermoplastische Spritzgußmaterial mit hoher Wärmeleiteigenschaft ausgebildet sein. Die Unterseite der Leiterplatte (2) ohne Kupferstruktur (7) besteht üblicherweise aus der FR-4 Oberfläche bzw. einer allfälligen Lötstopmaske.

Es kann die gesamte Unterseite der Leiterplatte (2) mechanisch und/oder ätztechnisch und/oder lasertechnisch aufgerauht bzw. bearbeitet mit einer Struktur ausgebildet sein, die einen möglichst guten Haftverbund zum Spritzgußkunststoff des Gehäuses (3) ermöglicht.

Insbesondere können Sacklöcher (16) bzw. Durchsteigelöcher (10) die Haftung bzw. Verankerung der Leiterplatte (2) im Kunststoffmaterial des Gehäuses (3) wesentlich erhöhen, wenn das Kunststoffmaterial in die Sachlöcher und/oder durch die Durchsteigelöcher (10) hindurch greift. Die gute Haftung ist speziell dann erforderlich, wenn die Ausdehungskoeffizienten zwischen dem gewählten Spritzgußmaterial des Gehäuses (3) und der Leiterplatte (2) unterschiedlich ist und die Leiterplatte im Betrieb Temperaturen im Bereich bis 120°C und darüber erreicht. Erfahrungsgemäß sollen elektronische Bauteile (4, 5) für eine lange Lebensdauer nicht lange Zeit über 80°C bzw. 120°C betrieben werden.

Bei einem derartigen Einlegespritzgußteil aus Leiterplatte (2) und Gehäuse (3) besteht grundsätzlich die Gefahr, daß bereits beim Einlegespritzguß durch den hohen Spritzgußdruck bzw. dem anschließenden Abkühlvorgang ein Luftspalt zwischen der Unterseite der Leiterplatte (2) und dem angespritzten Gehäuse (3) entsteht und derart der Wärmeübergang sehr schlecht wird.

Dies kann einerseits durch eine randseitige Umspritzung (14) vermieden werden oder bei dünnen bzw. flexiblen Leiterplatten (2) oder bei großflächigen Leiterplatten (2) durch die Ausbildung von Niederhalteelementen (15), wobei diese durch das Spritzgußmaterial des Gehäuses (3) gebildet werden und der Niederhalter im Spritzgußwerkzeug wie in Figur 1 schematisch dargestellt in der Form eines Nietkopfes (12) ausgebildet sein kann. Je nach Gerätedesign können hier viele andere gestalterische Ausführungen gewählt werden.

Diese Niederhalteelemente (15) werden bevorzugt dort angeordnet, wo das Gehäuse (3) eine Ansammlung an Material aufweist, insbesondere in Form einer Kühlrippe (17).

Der spaltfreie Formschluß zwischen dem aus Kunststoff bestehenden und angespritzten Gehäuse (3) und Leiterplatte (2) kann auch bei höheren Temperaturen durch die Verwendung von Preßstiften (11) mit einem Stiftkopf (12) erhöht werden. Preßstifte (Press-Fits) werden in einer Vielzahl an Ausbildungsformen standardmäßig in der Leiterplattenindustrie verwendet und werden insbesondere mit einem guten Wärmeleitvermögen verwendet und einer hohen Ausziehkraft bzw. einer guten Verankerung im Spritzgußmaterial des Gehäuses (3) zwecks optimaler Wärmespreitzung. Die Anordnung derartiger Preßstifte (11) auf der Leiterplatte erfolgt bevorzugt in Bereichen hoher Materialansammlung des Gehäuses (3) und ganz besonders im Bereich der Kühlrippen (17).

Übliche Spritzgußmaterialien mit einer Wärmeleitung von typisch 8 bis 10 W/m°K und bei speziellen Ausführungen bis über 20 W/m°K beruhen auf der Verwendung von hBN (hexagonalem Bor-Nitrid) und/oder Aluminium-Nitrid Partikeln mit unterschiedlicher Größenverteilung und unterschiedlicher PartikelForm und oftmals bewirkt die Beimengung von wenigen 0,1% nanoskaliger Teilchen, wie Silber oder Palladium oder uDiamond eine Verbesserung der Perkolation, also der durchgehenden Kontaktpfade der thermisch gut leitenden Additive bzw. Füllstoffe in der polymeren Matrix.

Die polymere thermoplastische Matrix soll weiters elektrisch isolierend mit einem Volumenwiderstand größer 10¹⁵ Ohm (ASTM D257) bzw. einem Oberflächenwiderstand größer 10¹⁴ Ohm (ASTM D257 bzw. DIN/IEC 6017) ausgebildet sein.

Als polymere Matrix werden Thermoplaste wie PC, PC-ABS-Blends, PC-PET-Blends, PA46, PA66, PBT, PPS, TPE und dergleichen Kunststoffe verwendet, die einen hohen Füllgrad ermöglichen und trotzdem noch gute mechanische Eigenschaften des Gehäuseteils (3) ermöglichen.

Ganz besonders muß bei den meisten elektronischen Geräten (1) auf die Erfüllung der UL94 Tests bezüglich der Brennbarkeit von Kunststoffen für Teile in Geräten und Anwendungen der Underwriters Laboratories (UL), insbesondere der Klassifizierung gemäß V-0, geachtet werden. Leiterplatten (2) auf Basis FR-4 weisen im Normalfall die UL94-V-0 Zertifizierung auf.

In einer speziellen Ausführungsform wird das Spritzgußmaterial des Gehäuses (3) bzw. der Reflektoroberfläche (9) derart gewählt, daß eine hohe Reflexion des Lichtes von größer 95% gegeben ist, wobei die Oberflächenrauigkeit daran angepaßt sein muß.

In einem derartigen Fall kann die Verwendung eines Zweischneckenspritzgußverfahrens ein Vorteil sein, da hier ein zweiter funktioneller thermoplastischer Kunststoff zusätzlich verwendet werden kann und beispielsweise im Bereich der Reflektoroberfläche (9) ein hochreflektierender Kunststoff verwendet wird oder in anderen Bereichen ein elastomerer Thermoplast verwendet werden kann und insgesamt die Funktionalität und/oder die Kosten optimiert werden können.

In Figur 2 wird ein schematischer Schnitt durch eine Leiterplatte (2) mit oberseitig angeordneten elektronischen Bauteilen (4, 5) und einer Kerbfräsung (8) dargestellt. In dieser Darstellung werden mehrere Preßstifte (11) unterschiedlich zur Figur 1 angeordnet und soll derart die Vielzahl an Gestaltungsmöglichkeiten zur optimalen Verbindung der Leiterplatte (2) mit dem Gehäuse (3) bzw. der Möglichkeiten der Wärmeableitung von elektrischen bzw. elektronischen Bauteilen (4, 5) aufgezeigt werden. Die dort dargestellte Leiterplatte (2) wird dann in gleicher oder ähnlicher Weise, wie in Figur 1 gezeigt, mit dem Kunststoff des Gehäuses (3) umspritzt.

### Zeichnungslegende

1. Elektronisches Gerät
2. Leiterplatte
3. Gehäuse aus einem mit BN bzw. AIN gefüllten thermoplastischen und spritzgußfähigen Kunststoff mit hoher Wärmeleiteigenschaft
4. Elektronischer Bauteil mit Wärmeentwicklung, z.B. LED
5. Elektronische Bauteile
6. Leiterbahnen auf der Oberfläche bzw. Bestückungsseite der Leiterplatte
7. Leiterbahnen auf der Unterseite bzw. der Anformungsseite der Leiterplatte
8. Kerbfräsung - Knickung bzw. Abwinkelung der Leiterplatte
9. Reflektoroberfläche
10. Vias bzw. Durchsteigelöcher mit thermisch gut leitenden Eigenschaften, auch als Thermovias bezeichnet
11. Preßstifte thermisch gut leitend, z.B. Press-Fit Stifte
12. Stiftkopf
13. Kühlrippen des Gehäuses
14. Randseitige Umspritzung
15. Niederhalteelement aus Kunststoff
16. Sacklöcher (Blind-holes) bzw. allg. Kavitäten bzw. Durchsteigelöcher (Vias)
17. Kühlrippen

## Patentansprüche

1. Verfahren zur Herstellung eines elektronischen Gerätes in der Form eines Spritzgußteils mit eingelegter Leiterplatte mit Wärme erzeugenden elektronischen Bauteilen, wobei die Leiterplatte in das Spritzgußwerkzeug eingelegt wird und zumindest von einer Seite formschlüssig mit einem thermoplastischen Spritzguß mit elektrischen Isoliereigenschaften und thermisch gut leitenden Eigenschaften angeformt wird, **dadurch gekennzeichnet, daß** das thermoplastische Spritzgußmaterial ein mit BN und/oder AIN Teilchen gefülltes Polymer ist und eine hohe Wärmeleiteigenschaft zur Bildung des aus Kunststoff bestehenden Gehäuses (3) aufweist und die Leiterplatte (2) im Bereich der Anformungsseite eine Oberflächenstruktur aufweist und derart das Spritzgußmaterial mittels Einlegespritzguß einen derart hohen Haftverbund erreicht, daß bei einer Erwärmung des elektronischen Gerätes (1) im Bereich des Überganges der Leiterplatte (2) zum Polymer die Formschlüssigkeit zumindest bis 120°C erhalten bleibt und derart eine gute Wärmeableitung gewährleistet ist.

2. Verfahren zur Herstellung eines elektronischen Gerätes nach Anspruch 1, **dadurch gekennzeichnet, daß** das thermoplastische Spritzgußmaterial zusätzlich optisch reflektierende Eigenschaften aufweist mit einer optischen Reflexion im sichtbaren Wellenlängenbereich der LEDs von zumindest 95%.

3. Verfahren zur Herstellung eines elektronischen Gerätes nach Anspruch 1 oder 2, **dadurch gekennzeichnet, daß** die eingelegte Leiterplatte eine HSMtec Leiterplatte ist.

4. Verfahren zur Herstellung eines elektronischen Gerätes nach einem der Ansprüche 1 bis 3, **dadurch gekennzeichnet, daß** das thermoplastisches Spritzgußmaterial ein mit BN und/oder AIN Teilchen gefülltes Polymer ist und eine Wärmeleiteigenschaft von zumindest 8 W/m°K, insbesondere größer 15 W/m°K und ganz besonders größer 20 W/m°K aufweist und elektrisch isolierend ist mit einem Volumenwiderstand größer 10¹⁵ Ohm (ASTM D257) bzw. einem Oberflächenwiderstand größer 10¹⁴ Ohm (ASTM D257 bzw. DIN/IEC 6017).

5. Verfahren zur Herstellung eines elektronischen Gerätes nach einem der Ansprüche 1 bis 4, **dadurch gekennzeichnet, daß** die Leiterplatte im Bereich der Spritzguß-Anformungsseite zumindest eine Leiterbahnstruktur aus Kupfer mit einer entsprechenden Oberflächenpassivierung mit Kavitäten bzw. Sacklöcher bzw. Bohrungen aufweist.

6. Verfahren zur Herstellung eines elektronischen Gerätes nach einem der Ansprüche 1 bis 5, **dadurch gekennzeichnet, daß** die Leiterplatte im Bereich der Anformungsseite mechanisch oder chemisch aufgerauht ausgebildet ist und derart eine gute Anbindung an das Spritzgußmaterial bewirkt.

7. Verfahren zur Herstellung eines elektronischen Gerätes nach einem der Ansprüche 1 bis 6, **dadurch gekennzeichnet, daß** die Leiterplatte eine 3-D Form aufweist bzw. Kerbfräsungen aufweist und in gebogener Form in das Spritzgußwerkzeug eingelegt wird.

8. Verfahren zur Herstellung eines elektronischen Gerätes nach einem der Ansprüche 1 bis 7, **dadurch gekennzeichnet, daß** die elektronischen Bauteile LEDs sind.

9. Verfahren zur Herstellung eines elektronischen Gerätes nach einem der Ansprüche 1 bis 8, **dadurch gekennzeichnet, daß** das thermoplastische Spritzgußmaterial neben den BN und/oder AIN Teilchen zusätzlich nanoskalige Teilchen aufweist und derart die Wärmeleiteigenschaft sowohl in der x-y-Richtung, als auch in der z-Richtung verbessert.

10. Verfahren zur Herstellung eines elektronischen Gerätes nach einem der Ansprüche 1 bis 9, **dadurch gekennzeichnet, daß** die Leiterplatte zumindest stückweise randseitig umschließend umspritzt wird und derart zumindest stückweise randseitig formschlüssig im Gehäuse integriert ist.

11. Verfahren zur Herstellung eines elektronischen Gerätes nach einem der Ansprüche 1 bis 10, **dadurch gekennzeichnet, daß** durch Löcher bzw. Durchsteigelöcher in der Leiterplatte Spritzgußmaterial durchdringend gespritzt wird und derart Niederhaltelemente im inneren bzw. mittigen Bereich der Leiterplatte ausbildet.

12. Verfahren zur Herstellung eines elektronischen Gerätes nach einem der Ansprüche 1 bis 11, **dadurch gekennzeichnet, daß** die Leiterplatte Löcher bzw. Durchsteigelöcher aufweist und durch diese thermisch gut leitende Stifte aus Kupfer bzw. einer Kupferlegierung bzw. aus Messing bzw. aus Aluminium formschlüssig gepreßt sind und weitgehend bündig bzw. in der Form eines Nietkopfes auf der Bauteilseite der Leiterplatte ausgebildet sind und auf der unteren Leiterplattenseite entsprechend dem Gerätedesign hervorstehen und vollständig vom Spritzgußmaterial umschlossen sind und derart die Wärme aus den Bauteilen auf Leiterplatte über die Leiterplatte in das thermisch gut leitfähige Kunststoffmaterial des Gehäuses leiten.

13. Verfahren zur Herstellung eines elektronischen Gerätes nach einem der Ansprüche 1 bis 12, **dadurch gekennzeichnet, daß** die thermisch gut leitenden Stifte sogenannte Press-Fit Stifte bzw. allgemein Einpreßstifte für Leiterplatten sind.

14. Verfahren zur Herstellung eines elektronischen Gerätes nach einem der Ansprüche 1 bis 13, **dadurch gekennzeichnet, daß** die Oberflächenpassivierung der Leiterplatte im Bereich der Anformungsseite bzw. Anformungsfläche und der zumindest einen Leiterbahnstruktur aus Kupfer organisch ist (OSP Organic Solderability Preservative - z.B. Entek oder Shikoku-Glicote oder Tamura-Solderite) oder metallisch ist und derart aus chemisch Nickel oder Nickel-Gold oder Nickel-Silber gebildet ist.

15. Verfahren zur Herstellung eines elektronischen Gerätes nach einem der Ansprüche 1 bis 14, **dadurch gekennzeichnet, daß** das thermoplastische thermisch gut leitfähige Spritzgußmaterial auf Basis von ABS/PC oder PC oder PC/PET oder PA46 oder PA66 oder PBT oder PPS oder TPE gewählt ist und mit BN und/oder AIN Teilchen mit guten Wärmeleiteigenschaften und hohen elektrischen Isoliereigenschaften gebildet ist.

16. Elektronisches Gerät hergestellt nach einem der Ansprüche 1 bis 15 mit integrierter Wärmeableitung des Gehäuses von einer integrierten Leiterplatte mit elektrischen bzw. elektronischen Bauelementen mit hoher Wärmeerzeugung.
